# EUROPEAN PATENT SPECIFICATION

(11) **EP 1 806 009 B1**
(45) Date of publication and mention of the grant of the patent: **26.11.2008**
(21) Application number: 05798186.2
(22) Date of filing: 27.10.2005
(51) Int. Cl.: H04Q 7/22, H04M 3/53

(54) **TELECOMMUNICATIONS SERVICES APPARATUS AND METHODS**
VORRICHTUNG UND VERFAHREN FÜR TELEKOMMUNIKATIONSDIENSTE
APPAREIL ET PROCEDE DE SERVICES DE TELECOMMUNICATION

(30) Priority: 27.10.2004 GB 0423850; 05.11.2004 GB 0424523
(43) Date of publication of application: 11.07.2007
(73) Proprietor: INTELLPROP LIMITED, Guernsey, Channel Islands (GB)
(72) Inventor: WILSON, Jeffrey, Hampshire PO16 7OH (GB)
(74) Representative: Lewis, Darren John
(86) International application number: PCT/GB2005/004162
(87) International publication number: WO 2006/046051

(56) References cited:
- EP-A- 1 091 607
- US-A1- 2002 160 805
- US-A1- 2003 139 193
- US-B1- 6 424 828
- US-B1- 6 560 456

## Description

This invention relates to a telecommunications services apparatus and methods for use with a mobile telecommunications system, such as a mobile telephone system, and preferably in the context of apparatus and methods for multimedia messaging.

Text messaging services on mobile telephone networks have grown enormously in popularity and usage, to the point where in 2004 the annual rate of GSM Short Messaging Services (SMS) text messaging was around 0.5 trillion messages per year. Multimedia Messaging (NMS) has been introduced as an evolution of SMS. MMS allows the sending and receiving of sound, video, picture and text, or other content, as part of a mobile-originated or mobile terminated message. Any one or more of the aforementioned types of content may be referred to by the generic term 'multimedia' in the context of mobile telephony.

Mobile handsets capable of displaying colour pictures, and taking photographs with integral digital cameras are now commonplace, and the MMS service is designed to allow such pictures to be exchanged person-to-person between handsets.

An MMS message is sent to a receiving handset by a multi-step process. A mobile originated MMS message first passes via the multimedia message service centre (MMSC) in the sender's network, and then to the MMSC in the recipient's network if that is a different network. The MMSC stores the message content and dynamically assigns it an address in the form of an Internet Uniform Resource Locator (URL). From there, the MMSC sends out an SMS text message known as an 'MMS push' or a 'WAP push'. This is a text message containing a specification of the URL from where the content may be retrieved. On receipt of the push message, the recipient's handset may then prompt the user, or may automatically set up a GPRS connection in order to retrieve the content. The WAP push technique is required in the mobile telephone environment because GSM networks are in general incapable of setting up a GPRS session with a client handset. The GPRS link can only be set up from the handset end.

Hence SMS has been adopted as the signalling mechanism to inform a recipient about a waiting MMS message.

Many MMS-capable handsets are also able to access other URLs on the Internet, not just those dynamically created by an MMSC, through this capability may be limited on some networks by operator-controlled barrings. In general, MMS-capable handsets are capable of retrieving content from an Internet URL, provided the URL specifies a data type that the handset is capable of interpreting, for example .JPG, .GIF or .HTML. The URL may be passed to the handset using WAP Push methods, and the handset may automatically retrieve the indicated URL, or may prompt the user for permission first.

At present MMS is primarily sender-initiated, because the message is created and initially transmitted by a sender. There is still little support at this time for recipient-driven services involving multimedia content. If a recipient wishes to obtain a picture, for example an image of a celebrity or a picture of a holiday resort, it is difficult for him to obtain such content on demand to his mobile telephone.

One of the fundamental difficulties with providing recipient-driven services in any field is that of providing the prospective recipient with the necessary knowledge to adequately specify the desired material. In many fields the problem is addressed by advertissing. For example magazines or newspapers may publish lists of commodities (e.g. ring-tones, audio services or information services) that may be purchased by dialling or texting to a specific number. Other types of service may further introduce interactive menus to help the user to navigate to the desired service or content. On the Internet, the problem may be addressed by providing a search engine, whereby keywords or phrases can lead the user to a list of matching URLs. However this can be unsatisfactory because of the high level of irrelevant results that can be obtained by such a method.

EP 1 091 607 A2 describes an apparatus for providing Internet content to SMS-based mobile terminals, comprising means for receiving an SMS from a mobile terminal including a keyword related to requested content, determining an URL corresponding to said keyword, sending a request to said URL, and providing the content to the mobile terminal in a further SMS.

In a mobile telephone environment, bandwith is limited and so communication with the network must be minimised, and made as efficient as possible. Consequently search-based solutions are usually unsuitable for a mobile user, as they would be too slow and inefficient.

The present invention applies not only to GSM but also to other similar technologies in use in other types of mobile telecommunications networks, such as TDMA or CDMA.

According to one aspect of the invention as disclosed in claim 1, there is provided a telecommunications services apparatus for use with a mobile telecommunications network, the apparatus comprising means for receiving a first text message from a mobile telephone, means for processing the received first text message so as to determine a network address from the processed first text message, and means for sending the determined network address as a second text message to said mobile telephone or to another mobile telephone. The means for processing comprise an engine capable of interpreting natural language included in said first text message to determine said network address and operable, in the event that a suitable network address can not be determined, to enter into a dialogue with a uses of said mobile telephone.

According to a further aspect of the invention as disclosed in claim 13, there is provided a telecommunications services method for a mobile telecommunications network, the method comprising receiving a first text message from a mobile telephone, processing the received first text message so as to determine a network address from the processed first text message, and sending the determined network address as a second text message to said mobile telephone or to another mobile telephone, wherein processing of the received first text message is performed by an engine capable of interpreting natural language included in said first text message to determine said network address and operable, in the event a suitable network address can not be determined, to enter into a dialogue with a user of said mobile telephone.

Other aspects of the invention include a computer program according to claim 24 having computer executable instructions, which when loaded on to a computer is operable to cause the computer to perform the above method, and a computer program product according to claim 25 comprising a computer readable medium having recorded thereon information signals representative of the computer program.

Further particular aspects of the invention are defined in the dependent claims.

The invention will now be described by way of example with reference to the accompanying drawings, throughout which like parts are referred to by like references, and in which:
Figure 1 is a block diagram of telecommunications services apparatus, according to one embodiment of the invention; and
Figure 2 is a block diagram of telecommunications services apparatus according to another embodiment of the invention.

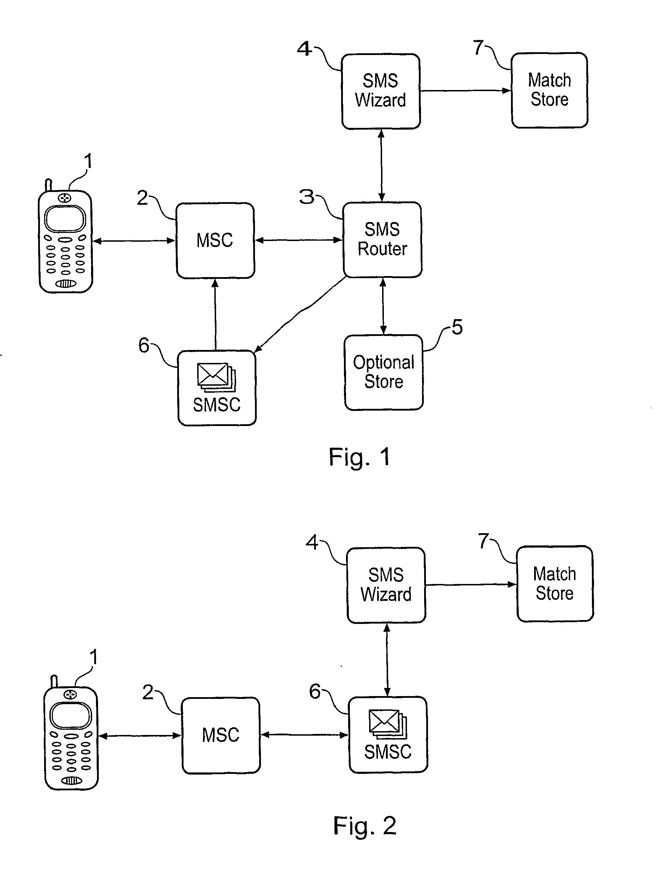

Figure 1 shows a mobile handset 1 from which may be sent a text message via a mobile switching centre (MSC) 2 to an SMS router 3 (for example, a Telsis (RTM) SMS Router, manufactured by Telsis Limited), which interprets the message as a request for determination of a URL. The message content is passed to a so-called SMS Wizard 4 which processes the message and determines a suitable URL if available (if not, the SMS Wizard 4 can enter into a dialogue with the user.) A log of matches and failed matches may be kept in an optional match store 7. The URL is returned to the SMS router 3 embedded within the format of a WAP Push text message. The router 3 may then attempt to direct deliver the WAP Push message as a mobile terminated (MT) format SMS message to the original sender's handset 1 or to another recipient. If the attempted delivery is unsuccessful, the message may be stored for later retry in an optional SMS router store 5 or may be sent as a mobile originated (MO) format message to a short message service centre (SMSC) 6.

The SMS Wizard 4 is an engine capable of interpreting predefined syntax and/or natural language, by means of text messaging, for example as disclosed in EP-A-1 185 119.

Figure 2 shows a mobile handset 1 from which may be sent a text message via an MSC 2. The message content is passed to an SMSC 6, which interprets the message as a request for determination of a URL, for example by examining the destination address. The message is then passed via an interface such as SMPP to the SMS Wizard 4 which processes the message and determines a suitable URL if available (if not the SMS Wizard 4 can enter into a dialogue with the user.) A log of matches and failed matches may be kept in an optional match store 7. The URL is returned to the SMSC 6 over for example SMPP, embedded within the format of a WAP Push text message. The SMSC 6 may then attempt to direct deliver the WAP Push message as an MT format SMS message to the original sender's handset 1, or to another recipient. If the attempted delivery is unsuccessful, the message may be stored for later retry in the SMSC 6.

Samuel Johnson (1707-1784) is quoted as saying "If it rained knowledge, I'd hold out my hand; but I would not give myself the trouble to go in quest of it." This aptly illustrates the present situation with regard to connectivity between a prospective MMS user and the very large number of potential items of content that the user might like to download - if it were easy to do so.

The benefit of the present technique is that it makes it easy for a user to find an item of content that they want. The use of an intelligent engine such as a Wizard is fundamentally different from using a menu-based approach. Many types of GPRS service have been introduced by different operators that present menu choices to users. The disadvantages of a menu approach include-
■ Menus are hard to keep up to date, and tend to grow in an unbalanced and unmanageable way
■ You cannot click an item that is not present there on a menu, so the administrators get no feedback about what people are looking for but cannot find.
■ In contrast to a menu, a Wizard can accept all requests, and can log those that are successful and those that are unsuccessful in its match store, allowing the administrator to be aware of the demands of the user base. The service can therefore evolve to meet the needs of the user.
■ Using a menu is the easy way to start a small-scale retrieval service, but it does not scale to a flexible service such as is provided by the present technique.
■ Menus also suffer from a cross-classification problem. As the system grows and more and more categories are added to the menu tree, an increasing number of content items belong in more than one menu category. As the menu grows further, the amount of cross-classification grows exponentially until the menu becomes unmanageable. A Wizard does not suffer from this problem.

The present technique can be likened to an instant encyclopaedia, where the publisher can be informed about requested information that isn't already there, and where the users can browse without needing to know the locations of a given piece of content. Examples of the types of requests that could be supported by the technique could be-
■ 'Picture of George Washington'
■ 'sound of blackbird'
■ 'picture of Belgian flag'
■ 'webcam of Sydney Harbour'

Another advantage of the present technique is that some types of content may be dynamic. For example, if a user has found that by requesting 'view of Sydney Harbour' he can obtain a picture of the current view, then each time he requests this information he may obtain the most recently updated version from that source, without any additional effort on his part.

Available content may include sounds, pictures, movie clips, puzzles, or text, in fact any material supported by the operator's data transport service and the capabilities of the handset. Examples include chess problems, word puzzles, cartoons, portraits, webcams, sound files, movie clips etc. By storing certain text message requests in his mobile handset, the user can build a library of frequently used links or 'favourites' for speedily accessing any desired content. Content push can also be offered proactively by the operator as part of other services.

In a preferred embodiment, the invention may be used by a mobile phone subscriber to request content, such a picture, from an Internet URL without the user having to know the URL. The Wizard 4 contains knowledge tables and a natural language processor which can receive user input from a text message and from that determine a suitable URL. For example the user may enter "picture of a rose" and send this as a text message.

The message may be sent to a service address, such as a well-known short code, or to a virtual mobile address that is accessible from any network. The address may be alphanumeric, so that the request can be sent to 'Google' or 'Vodafone' or 'Lucy' for example, providing a branded service where the quality of the returned information is indicated by the association with a brand.

In a preferred embodiment, for example, the text 'Sydney Harbour' could be sent to the alphanumeric address 'webcam'. In an alternative embodiment, the text 'webcam of Sydney Harbour' could be sent to a well-known short code, numeric or alphanumeric address, such as an operator's customer care number for example.

In an alternative preferred embodiment, as an example, the text '*mms# webcam of Sydney Harbour' could be sent to another person's mobile telephone number. Alternative syntaxes could be used. The syntax preferably allows simple determination from the message content that the message is to be interpreted as a request to send a WAP push message, in this case by using the prefix *mms#, to another mobile telephone, allowing the recipient to retrieve the indicated content.

A further alternative would be to send the request message to a predetermined destination such as a short code or alphanumeric address, and to put the address of the intended recipient within the message body.

In a further embodiment, a URL could be sent to a mobile telephone number, either as a URL within a normal text message, or as a WAP push URL. Many phones allow a recipient to select and navigate to a URL received within a normal text message. A suitable syntax for sending a URL to a third party would be '*URL#www.domain.com/filepath.extn'. Other syntaxes are possible.

Using these techniques it is possible to easily specify an Internet object or a URL (for example some new content on one's own web site), that can be sent to one's own, or to another person's handset, either as a WAP push message or as a URL carried by other means, enabling the recipient to easily retrieve the indicated content.

The message may be intercepted by the SMS router 3 using known network means. The router 3 may determine that the message either contains a URL or is intended for conversion to a URL by any one or more means such as
■ detection of a special command code in, or at the start of, the message body
■ detection of a special prefix or suffix on the destination address
■ detection of a special destination address, short code or number
■ detection of a special signalling parameter setting or other signalling characteristic
■ interpretation of natural language
■ another method.

The message content, or the entire message, is passed to the SMS Wizard text processing engine 4 for text processing.

Alternatively the SMS Wizard 4 may be connected behind an SMSC using for example an SMPP interface or other method well-known in the art for connecting host applications into a mobile network.

The message content sent by the user may conform to a predefined syntax, or may be just natural language. From the message content received by the SMS Wizard 4, the SMS Wizard 4 may determine a suitable URL that may be returned as the response by means of its intelligent text processing algorithms, and using tables, rules, exceptions and/or other techniques. Alternatively if no suitable URL exists, the Wizard 4 may enter into a dialogue with the user.

Unlike a menu approach, the Wizard's scope can be expanded indefinitely, using its natural language capability to resolve ever more detailed queries. For example, an early version of the system might be capable of providing a URL in response to a request such as 'Picture of Shirley Temple', while a later version might be capable of differentiating between requests for 'Picture of Shirley Temple as a girl' and 'Picture of Shirley Temple as a politician'. It would also be possible for the Wizard to enter into a dialogue. For example, a request for 'Picture of George Bush' could result in Wizard sending back a text response with options, asking which George Bush was required.

The SMS Wizard 4 can enter into a dialogue that would assist a user in finding content. For example, the Wizard 4 may be cap able of handling queries about classes of content, such as 'Do you have any pictures of American Presidents'. This type of textual dialogue and interpretation is a strength of the SMS Wizard 4, and the provision of WAP push content is just one possible outcome of a dialogue between a user and a Wizard.

When a suitable URL exists, the Wizard 4 then creates a message in WAP Push format, containing the URL. A WAP push mess age may extend over one or more text message segments, using message concatenation. If there is no suitable URL, the Wizard 4 may return a text message indicating that the request could not be satisfied; it could also indicate that suitable content will be provided shortly.

An example of a WAP Push format text message over 2 message segments is given below.

### Message segment 1

44 0C 91 44 77 04 67 wx yz 00 F5 40 90 31 31 92 93 40 7A 06 05
04 0B 84 23 F0 00 06 22 61 70 70 6C 69 63 61 74 69 6F 6E 2F 76
6E 64 2E 77 61 70 2E 6D 6D 73 2D 6D 65 73 73 61 67 65 00 AF 84
8C 82 98 61 00 8D 90 96 07 EA 7F 74 65 73 74 00 8A 80 8E 01 1E
88 06 81 04 3D D9 D6 F3 83 68 74 74 70 3A 2F 2F xx xx xx 2E yy
yy yy 2E 31 33 39 2E 31 37 30 2F 6D 6D 73 2F 67 65 74 6D 6D 73
2E 61 73 70 3F 77 61 70 69 64 3D 38 38 32

### Message segment 2

44 0C 91 44 77 04 67 wx yz 00 F5 40 80 72 31 92 93 40 35 06 05
04 0B 84 23 F0 43 06 01 AE 02 05 6A 00 45 C6 0D 03 yy yy yy yy
yy yy 2E 63 6F 6D 2F 62 62 73 2F 63 63 2E 6A 70 67 00 07 01 03
68 65 6C 6C 6F 2E 00 01 01

The first message segment can be interpreted as follows

| | | | | | | | | | |
|---|---|---|---|---|---|---|---|---|---|
| 44 | Message Type Indicator (bits 1,0) = 00 | | | | | = SMS-Deliver | | | |
| | More Messages to Send (bit 2) =1 | | | | | = ON | | | |
| | Status Report Indication (bit 5) =0 | | | | | = OFF | | | |
| | User Data Header Indicator (bit 6) = 1 | | | | | = ON; | | | |
| | Reply Path (bit 7) = 0 | | | | | = OFF | | | |
| 0C | Originating Address Length | | | | | = 12 semi-octets | | | |
| 91 | Originating Address Type = 91 | | | | | | | | |
| | Type of number = 001 | | | | | = International number | | | |
| | Numbering Plan identification = 0001 | | | | | = ISDN numbering plan | | | |
| 44 | Originating address = 44 77 04 67 wx yz | | | | | = +44 7740 76xwzy | | | |
| 77 | | | | | | | | | |
| 04 | NB: wxyz represent digits, which have been obscured for privacy reasons. | | | | | | | | |
| 67 | | | | | | | | | |
| wx | | | | | | | | | |
| yz | | | | | | | | | |
| 00 | Protocol Identifier = 00 | | | | | = Normal SMS | | | |
| F5 | Data Coding Scheme = F5 | | | | | = 8-bit data, Class 1 | | | |
| 40 | Service Centre Time Stamp = 40 90 62 51 92 93 40 | | | | | | | | |
| 90 | | | | | | = Year = 40 | | = 04 (2004) | |
| 31 | | | | | | = Month = 90 | | = 09 (Sep) | |
| 31 | | | | | | = Day = 31 | | = 13^{th} | |
| 92 | | | | | | = Hour = 31 | | = 13 | |
| 93 | | | | | | = Minute = 92 | | = 29 | |
| 40 | | | | | | = Second = 93 | | = 39 | |
| | | | | | | = Timezone = 40 | | =+1 hour (BST) | |
| 7A | User Data Length = 7A | | | | | = 122 octets | | | |
| 06 | User Data Header Length = 06 | | | | | = 6 octets | | | |
| 05 | Information Element Identifier = 05 | | | | | = 16-bit Application Port Addressing | | | |
| 04 | Information Element Identifier Data length | | | | | = 4 | | | |
| 0B | Information Element Identifier Data 0B 84 23 F0 | | | | | | | | |
| 84 | | | | | | = Destination Port 0B84 = 2948 | | | |
| 23 | | | | | | = Source Port 23F0 = 9200 | | | |
| F0 | | | | | | | | | |
| | <End of User Data Header> | | | | | | | | |
| 00 | WSP TID | | | | | = Transaction ID = 0 | | | |
| 06 | WSP PDU type = 6 | | | | | = Push | | | |
| 22 | header length = 22 | | | | | = text header 34 octets | | | |
| 61 | header content = 61 70 70 6C 69 63 | | | | | = application/vnd.wap.mms-message | | | |
| 70 | 61 74 69 6F 6E 2F 76 6E 64 2E 77 | | | | | | | null | terminated |
| " | 61 | 70 | 2E | 6D | 6D | 73 | 2D | 6D | 65 73 |
| " | 73 61 67 65 00 | | | | | | | | |
| 65 | | | | | | | | | |
| 00 | | | | | | | | | |
| AF | header field name (WSP tbl 39) = 2F (+80) | | | | | = X-Wap-Application-ID | | | |
| 84 | push application ID (WINA)= 04 (+80) | | | | | = application:mms.ua | | | |
| | <Push data starts here, which is in MMS message format with all the headers but without the content> | | | | | | | | |
| 8C | header field name = 0C (+80) | | | | | = X-MMS-Message-Type | | | |
| 82 | mms message type = 02 (+80) | | | | | = m-notification-ind | | | |
| 98 | header field name = 18 (+80) | | | | | = X-MMS-Transaction-Id | | | |
| 61 | Transaction ID = 61 00 | | | | | = 'a' null terminated | | | |
| 00 | | | | | | | | | |
| 8D | header field name = 0D (+80) | | | | | = X-MMS-Mms-version | | | |
| 90 | Mms version = 10 (+80) | | | | | = 1.0 | | | |
| 96 | header field name = 16 (+80) | | | | | = MMS-Message-Subject | | | |
| 07 | subject length = 07 | | | | | = 7 octets | | | |
| EA | subject charset = 6A (+80) | | | | | = UTF-8 character set | | | |
| 7F | subject text string = 7F 74 65 73 74 00 | | | | | = 'àtest' null terminated | | | |
| 74 | | | | | | | | | |
| 65 | | | | | | | | | |
| 73 | | | | | | | | | |
| 74 | | | | | | | | | |
| 00 | | | | | | | | | |
| 8A | header field name = 0A (+80) | | | | | = MMS-Message-Class | | | |
| 80 | message class = 00 (+80) | | | | | = class 0 | | | |
| 8E | header field name = 0E (+80) | | | | | = MMS-Message-Size | | | |
| 01 | message size = 01 1E | | | | | =011E=286 octets | | | |
| 1E | | | | | | | | | |
| 88 | header field name = 08 (+80) | | | | | = MMS-Message-Expiry | | | |
| 06 | expiry field length = 06 | | | | | = 6 octets | | | |
| 81 | expiry type = 81 | | | | | = relative time | | | |
| 04 | time field length | | | | | = 4 octets | | | |
| 3D | expiry value = 3DD9 D6 F3 | | | | | = expiry time, | | | |
| D9 | | | | | | seconds since 1970-01-01 00:00:00 | | | |
| D6 | | | | | | = 32.9 years | | | |
| F3 | | | | | | | | | |
| 83 | header field name = 03 (+80) | | | | | = MMS-Message-Content-Location | | | |
| | content = | | | | | 'http://xxx.yyy.131.179/ | | | |
| | 68 74 74 70 3A 2F 2F xx xx xx | | | | | mms/getmms.asp?wapid=882' | | | |
| | 2E yy yy yy 2E 31 33 31 2E 31 | | | | | | | | |
| | 37 39 2F 6D 6D 73 2F 67 65 74 | | | | | | | | |
| | 6D 6D 73 2E 61 73 70 3F 77 61 | | | | | NB: xx yy represent some characters, | | | |
| | 70 69 64 3D 38 38 32 | | | | | obscured for privacy reasons | | | |

The second message segment can be interpreted as follows

| | | | |
|---|---|---|---|
| 44 | Message Type Indicator (bits 1,0) = 00 | = SMS-Deliver | |
| | More Messages to Send (bit 2) = 1 | = ON | |
| | Status Report Indication (bit 5) = 0 | = OFF | |
| | User Data Header Indicator (bit 6) = 1 | = ON; | |
| | Reply Path (bit 7) = 0 | = OFF | |
| 0C | Originating Address Length | =12 semi-octets | |
| 91 | Originating Address Type = 91 | | |
| | Type of number = 001 | = International number | |
| | Numbering Plan identification = 0001 | = ISDN numbering plan | |
| 44 | Originating address = 44 77 04 67 wx yz | = +44 7740 76xwzy | |
| 77 | | | |
| 04 | NB: wxyz represent digits, which have been obscured for privacy reasons. | | |
| 67 | | | |
| wx | | | |
| yz | | | |
| 00 | Protocol Identifier= 00 | = Normal SMS | |
| F5 | Data Coding Scheme = F5 | = 8-bit data, Class 1 | |
| 40 | Service Centre Time Stamp = 40 80 62 51 92 93 40 | | |
| 80 | | = Year = 40 | = 04 (2004) |
| 72 | | = Month = 80 | = 08 (Aug) |
| 31 | | = Day = 72 | = 27^{th} |
| 92 | | = Hour = 31 | = 13 |
| 93 | | = Minute = 92 | = 29 |
| 40 | | = Second = 93 | = 39 |
| | | = Timezone = 40 | = +1 hour (BST) |
| 35 | User Data Length = 35 | = 53 octets | |
| 06 | User Data Header Length = 06 | = 6 octets | |
| 05 | Information Element Identifier = 05 | = 16-bit Application Port Addressing | |
| 04 | Information Element Identifier Data length = 4 | | |
| 0B | Information Element Identifier Data 0B 84 23 F0 | | |
| 84 | | = Destination Port 0B84 = 2948 | |
| 23 | | = Source Port 23F0 = 9200 | |
| F0 | | | |
| | <End of User Data Header> | | |
| 43 | WSP TID | = Transaction ID = 43 | |
| 06 | WSP PDU type = 6 | = Push | |
| 01 | header length = 01 | = 1 octet | |
| AE | content type = 2E (+80) | = application/vnd.wap.sic | |
| | <Push data starts here> | | |
| 02 | version = 02 | = WBXML V 1.2 | |
| 05 | publicid = 05 | = SI 1.0 Public Identifier | |
| 6A | charset = 6A | = UTF-8 character set | |
| 00 | strtbl length = 00 | = no string table | |
| 45 | token | = SI with content | |
| C6 | token | = indication, with content and attributes | |
| 0D | token | = 'http:/www.' | |
| 03 | token | = in-line string follows | |
| yy | yy yy yy yy yy yy 2E 63 6F 6D 2F | = 'yyyyyy.com/ccs/bb/jpg' null terminated | |
| yy | 63 6373 2F 62 62 2E 6A 70 67 00 | | |
| " | | | |
| | | NB: yy represents some characters, obscured for privacy reasons | |
| 67 | | | |
| 00 | | | |
| 07 | token | = signal medium (alert type/volume) | |
| 01 | token | = end of indication attribute list | |
| 03 | token | = in-line string follows | |
| 68 | 68 65 6C 6C 6F 2E | = 'hello.' null terminated | |
| 65 | | | |
| " | | | |
| " | | | |
| 2E | | | |
| 00 | | | |
| 01 | end of indication | | |
| 01 | end of SI element | | |

By restricting the WAP Push message content, for example by missing out most of the MMS headers, which are optional, then provided the combined length of the textual part of the message and the URL does not exceed a certain number of characters, it is possible (but not essential) to fit the WAP Push into a single message segment.

This technique provides connectivity between the millions of mobile phone users, and multimedia content that is already available on the Internet. By programming an SMS Wizard to allow the user to find suitable desired content merely by requesting with a keyword or simple name, it is now possible for a huge range of content to be made available on mobile telephones without users needing to know URLs. The services enabled by this technique are recipient-initiated, which allows content to be requested, which is a precondition for rapid growth in MMS markets.

It is envisaged that embodiments of the invention will be ideally suited to the viewing of webcam images on a mobile handset. There are tens of thousands of webcams available, providing image updates at various intervals, depicting road junctions, holiday destinations, famous places etc. At present these are largely inaccessible to MMS users due to the difficulties of determining a suitable address as described. The present technique allows one to request for example 'webcam of Panama Canal' to immediately be able to view a recent image. The connectivity thus obtained cannot be overestimated. In a 3G mobile environment, this can also be extended to motion video applications.

As well as the content being configured by the operator or service provider, memory space could be made available in the Wizard for self-provisioned content. An example of this could be a security application, where a user may wish to provision a URL to the Wizard for subsequent viewing. In certain applications it may be desired that the URL is only viewed from a certain MSISDN, and one way this may be arranged is by ensuring that the provisioned URL itself contains the MSISDN number of the user. This may then be matched against a requesting handset's CLI, and the URL only provided if the numbers match. In other applications it may be desired to provision a URL, and a suitable tag name for it, that can be viewed by anyone who requests the tag name.

As an example, a security camera may be connected to the Internet using known techniques, providing regularly updated images at a certain URL. It can be arranged that the URL is formed using a certain predefined syntax, which contains the MSISDN number of a handset and a source identifier. To ensure that the user is entitled to use the phone number, known techniques may be used that, for example, send a password to the given phone number, where this password must be used in the configuration process. The source may be provisioned to the Wizard by means of a message sent in a predefined syntax from the associated MSISDN, which associates the source identifier with the constructed URL. The full URL need not be known to or recorded by the user.

The source may then be viewed by using another predefined syntax of message, for example 'webcam of my source 1'. From this the Wizard identifies the URL based on the MSISDN that sent the message, and the source identification (numeric or alphanumeric, in this case '1') and sends a WAP push message, allowing the latest image to be retrieved to that handset. This would allow, for example one to check on one's property from time to time while away on holiday.

The technique also opens up the possible usage of the MMS Blog. Currently Blogs exist primarily on the web, and can in some cases be updated by users with MMS handsets. However for a prospective recipient to view a Blog on a mobile handset currently requires knowledge of web addresses and is impractical for most users. However, using this technique, anyone can request access to another person's Blog simply by submitting a text message request. The desired Blog may be identified by characteristics of the text message (for example the destination number might be the number of the Blog owner while the content indicates that the message is a Blog request.) The most recent Blog entry could then be sent to the requester as a WAP push message, allowing the picture and text content to be downloaded to the handset. An example request might be 'Blog of 04700 123456'.

In so far as the embodiment(s) of the invention described above may be implemented, at least in part, using software controlled processing apparatus, it will be appreciated that a computer program providing such software control and a storage medium by which such a computer program is stored are envisaged as aspects of the invention.

## Claims

1. A telecommunications services apparatus for use with a mobile telecommunications network, the apparatus comprising means (3) for receiving a first text message from a mobile telephone (1), means (4) for processing the received first text message so as to determine a network address from the processed first text message, and means (3) for sending the determined network address as a second text message to said mobile telephone or to another mobile telephone, **characterised in that** the means for processing the received first text message comprises an engine (4) capable of interpreting natural language included in said first text message to determine said network address and operable, in the event a suitable network address can not be determined, to enter into a dialogue with a user of said mobile telephone.

2. Apparatus according to claim 1, wherein said engine (4) is operable, in the event a suitable network address can not be determined, to store said natural language in a match store (7).

3. Apparatus according to claim 1, wherein said engine (4) is operable, in the event a suitable network address can not be determined, to send a text message including options to said mobile telephone to assist in determining a suitable network address.

4. Apparatus according to claim 1, wherein the engine (4) is further capable of interpreting predefined syntax.

5. Apparatus according to any preceding claim, wherein the receiving means and the sending means comprise an SMS router (3).

6. Apparatus according to any preceding claim, wherein the determined network address comprises an indication of an internet address.

7. Apparatus according to claim 6, wherein the means for processing the received first text message is operable to provide the determined network address in the form of a URL.

8. Apparatus according to any preceding claim, wherein the means for processing the received first text message is operable to send the second text message as a WAP Push message.

9. Apparatus according to any one of claims 1 to 8, wherein the means (3) for receiving the first text message has an alphanumeric address for receipt of text messages.

10. Apparatus according to any one of claims 1 to 8, wherein the means (3) for receiving the first text message has a short code number for receipt of text messages.

11. Apparatus according to any one of claims 1 to 10, wherein the address of an intended recipient of the second text message is within the body of the first text message.

12. Apparatus according to any one of claims 1 to 11, comprising a match store (7) having a log of successful matches and failed matches of the processing means.

13. A telecommunications services method for a mobile telecommunications network, the method comprising receiving a first text message from a mobile telephone (1), processing the received first text message so as to determine a network address from the processed first text message, and sending the determined network address as a second text message to said mobile telephone or to another mobile telephone, **characterised in that** the processing of the received first text message is performed by an engine (4) capable of interpreting natural language included in said first text message to determine said network address and operable, in the event a suitable network address can not be determined, to enter into a dialogue with a user of said mobile telephone.

14. A method according to claim 13, wherein said engine (4) is operable, in the event a suitable network address can not be determined, to store said natural language in a match store (7).

15. A method according to claim 13, wherein said engine (4) is operable, in the event a suitable network address can not be determined, to send a text message including options to said mobile telephone to assist in determining a suitable network address.

16. A method according to claim 13, wherein said engine (4) is further capable of interpreting predefined syntax.

17. A method according to any one of claims 13 to 16, wherein the determined network address comprises an indication of an internet address.

18. A method according to claim 17, wherein the determined network address is in the form of a URL.

19. A method according to any one of claims 13 to 16, wherein the second text message is sent as a WAP Push message.

20. A method according to any one of claims 13 to 19, wherein the first text message is received by way of an alphanumeric address.

21. A method according to any one of claims 13 to 19, wherein the first text message is received by way of a short code number.

22. A method according to any one of claims 13 to 21, wherein the address of an intended recipient of the second text message is within the body of the first text message.

23. A method according to any one of claims 13 to 22, wherein a log of successful matches and failed matches of the processing step is stored in a match store (7).

24. A computer program having computer executable instructions, which when loaded on to a computer is operable to cause the computer to perform the method according to any one of claims 13 to 23.

25. A computer program product having a computer readable medium having recorded thereon information signals representative of the computer program according to claim 24.

## Patentansprüche

1. Telekommunikationsdienstevorrichtung zur Verwendung mit einem mobilen Telekommunikationsnetz, wobei die Vorrichtung eine Einrichtung (3) zum Empfangen einer ersten Textnachricht von einem Mobiltelefon (1), eine Einrichtung (4) zum Verarbeiten der empfangenen ersten Textnachricht, um eine Netzwerkadresse aus der verarbeiteten ersten Textnachricht zu bestimmen, und eine Einrichtung (3) zum Senden der bestimmten Netzwerkadresse als eine zweite Textnachricht an das Mobiltelefon oder an ein anderes Mobiltelefon aufweist, **dadurch gekennzeichnet, daß** die Einrichtung zum Verarbeiten der empfangenen ersten Textnachricht eine Engine bzw. Einrichtung (4) beinhaltet, die in der Lage ist, in der ersten Textnachricht enthaltene natürliche Sprache auszuwerten bzw. zu übersetzen, um die Netzwerkadresse zu bestimmen, und die so betreibbar ist, daß sie, falls eine geeignete Netzwerkadresse nicht bestimmt werden kann, mit einem Benutzer des Mobiltelefons in einen Dialog tritt.

2. Vorrichtung nach Anspruch 1, wobei die Engine (4) so betreibbar ist, daß sie, falls eine geeignete Netzwerkadresse nicht bestimmt werden kann, die natürliche Sprache in einem Übereinstimmungs- bzw. Verknüpfungsspeicher (7) speichert.

3. Vorrichtung nach Anspruch 1, wobei die Engine (4) so betreibbar ist, daß sie, falls eine geeignete Netzwerkadresse nicht bestimmt werden kann, eine Textnachricht, die Optionen beinhaltet, an das Mobiltelefon sendet, um die Bestimmung einer geeigneten Netzwerkadresse zu unterstützen.

4. Vorrichtung nach Anspruch 1, wobei die Engine (4) weiterhin eine vordefinierte Syntax übersetzen kann.

5. Vorrichtung nach einem der vorangegangenen Ansprüche, wobei die Einrichtung zum Empfangen und die Einrichtung zum Senden einen SMS-Router (3) beinhalten.

6. Vorrichtung nach einem der vorangegangenen Ansprüche, wobei die bestimmte Netzwerkadresse eine Angabe einer Internetadresse beinhaltet.

7. Vorrichtung nach Anspruch 6, wobei die Einrichtung zum Verarbeiten der empfangenen ersten Textnachricht so betreibbar ist, daß sie die bestimmte Netzwerkadresse in Form einer URL bereitstellt.

8. Vorrichtung nach einem der vorangegangenen Ansprüche, wobei die Einrichtung zum Verarbeiten der empfangenen ersten Textnachricht so betreibbar ist, daß sie die zweite Textnachricht als eine WAP-Push-Nachricht sendet.

9. Vorrichtung nach einem der Ansprüche 1 bis 8, wobei die Einrichtung (3) zum Empfangen der ersten Textnachricht eine alphanumerische Adresse für das Empfangen von Textnachrichten hat.

10. Vorrichtung nach einem der Ansprüche 1 bis 8, wobei die Einrichtung (3) zum Empfangen der ersten Textnachricht eine Kurzcodezahl für das Empfangen von Textnachrichten hat.

11. Vorrichtung nach einem der Ansprüche 1 bis 10, wobei die Adresse eines beabsichtigten Empfängers der zweiten Textnachricht innerhalb des Körpers der ersten Textnachricht enthalten ist.

12. Vorrichtung nach einem der Ansprüche 1 bis 11, welche einen Verknüpfungsspeicher (7) mit einer Liste von erfolgreichen Verknüpfungen bzw. Übereinstimmungen und fehlgeschlagenen Verknüpfungen der Verarbeitungseinrichtung beinhaltet.

13. Telekommunikationsdiensteverfahren für ein mobiles Telekommunikationsnetz, wobei das Verfahren das Empfangen einer ersten Textnachricht von einem Mobiltelefon (1), das Verarbeiten der empfangenen ersten Textnachricht, um eine Netzwerkadresse aus der verarbeiteten ersten Textnachricht zu bestimmen, und das Senden der bestimmten Netzwerkadresse als eine zweite Textnachricht an das Mobiltelefon oder ein anderes Mobiltelefon umfaßt, **dadurch gekennzeichnet, daß** das Verarbeiten der empfangenen ersten Textnachricht durch eine Engine bzw. Einrichtung (4) durchgeführt wird, die in der Lage ist, in der ersten Textnachricht enthaltene natürliche Sprache auszuwerten bzw. zu übersetzen, um die Netzwerkadresse zu bestimmen, und die so betreibbar ist, daß sie, falls eine geeignete Netzwerkadresse nicht bestimmt werden kann, mit einem Benutzer des Mobiltelefons in einen Dialog tritt.

14. Verfahren nach Anspruch 13, wobei die Engine (4) so betreibbar ist, daß sie, falls eine geeignete Netzwerkadresse nicht bestimmt werden kann, die natürliche Sprache in einem Verknüpfungsspeicher (7) speichert.

15. Verfahren nach Anspruch 13, wobei die Engine (4) so betreibbar ist, daß sie, falls eine geeignete Netzwerkadresse nicht bestimmt werden kann, eine Textnachricht, die Optionen beinhaltet, an das Mobiltelefon sendet, um die Bestimmung einer geeigneten Netzwerkadresse zu unterstützen.

16. Verfahren nach Anspruch 13, wobei die Engine (4) weiterhin eine vordefinierte Syntax übersetzen kann.

17. Verfahren nach einem der Ansprüche 13 bis 16, wobei die bestimmte Netzwerkadresse eine Angabe einer Internetadresse beinhaltet.

18. Verfahren nach Anspruch 17, wobei die bestimmte Netzwerkadresse die Form einer URL hat.

19. Verfahren nach einem der Ansprüche 13 bis 16, wobei die zweite Textnachricht als eine WAP-Push-Nachricht gesendet wird.

20. Verfahren nach einem der Ansprüche 13 bis 19, wobei die erste Textnachricht mittels einer alphanumerischen Adresse empfangen wird.

21. Verfahren nach einem der Ansprüche 13 bis 19, wobei die erste Textnachricht mittels einer Kurzcodezahl empfangen wird.

22. Verfahren nach einem der Ansprüche 13 bis 21, wobei die Adresse eines beabsichtigten Empfängers der zweiten Textnachricht innerhalb des Körpers der ersten Textnachricht vorliegt.

23. Verfahren nach einem der Ansprüche 13 bis 22, wobei eine Liste von erfolgreichen Verknüpfungen und fehlgeschlagenen Verknüpfungen des Verarbeitungsschritts in einem Verknüpfungsspeicher (7) gespeichert ist.

24. Computerprogramm mit computerausführbaren Anweisungen, das, wenn es auf einen Computer geladen wird, so betreibbar ist, daß es den Computer dazu bringt, das Verfahren nach einem der Ansprüche 13 bis 23 auszuführen.

25. Computerprogrammprodukt mit einem computerlesbaren Medium, auf dem Informationssignale aufgezeichnet sind, welche das Computerprogramm nach Anspruch 24 repräsentieren.

## Revendications

1. Appareil de services de télécommunications destiné à être utilisé dans un réseau de télécommunications mobiles, l'appareil comprenant un moyen (3) destiné à recevoir un premier message de texte en provenance d'un téléphone mobile (1), un moyen (4) destiné à traiter le premier message de texte reçu afin de déterminer une adresse de réseau à partir du premier message de texte ainsi traité et un moyen (3) destiné à envoyer l'adresse de réseau ainsi déterminée sous la forme d'un second message de texte audit téléphone mobile ou à un autre téléphone mobile, **caractérisé en ce que** le moyen de traitement du premier message de texte reçu comprend un moteur (4) qui est capable d'interpréter du langage naturel compris dans ledit premier message de texte afin de déterminer ladite adresse de réseau et qui est en mesure, si une adresse de réseau convenable ne peut pas être déterminée, à ouvrir un dialogue avec un utilisateur dudit téléphone mobile.

2. Appareil selon la revendication 1, dans lequel ledit moteur (4) est en mesure, si une adresse de réseau convenable ne peut pas être déterminée, de stocker ledit langage naturel dans une mémoire de correspondances (7).

3. Appareil selon la revendication 1, dans lequel ledit moteur (4) est en mesure, si une adresse de réseau convenable ne peut pas être déterminée, d'envoyer un message de texte contenant des options audit téléphone mobile afin de l'aider à déterminer une adresse de réseau convenable.

4. Appareil selon la revendication 1, dans lequel le moteur (4) est en outre en mesure d'interpréter une syntaxe prédéfinie.

5. Appareil selon l'une quelconque des revendications précédentes, dans lequel le moyen de réception et le moyen d'envoi sont constitués d'un routeur SMS (3).

6. Appareil selon l'une quelconque des revendications précédentes, dans lequel l'adresse de réseau déterminée comprend une indication d'une adresse internet.

7. Appareil selon la revendication 6, dans lequel le moyen de traitement du premier message de texte reçu est en mesure de fournir l'adresse de réseau déterminée sous la forme d'une URL.

8. Appareil selon l'une quelconque des revendications précédentes, dans lequel le moyen de traitement du premier message de texte reçu est en mesure d'envoyer le second message de texte sous la forme d'un message WAP en mode Push.

9. Appareil selon l'une quelconque des revendications 1 à 8, dans lequel le moyen (3) de réception du premier message de texte possède une adresse alphanumérique pour recevoir des messages de texte.

10. Appareil selon l'une quelconque des revendications 1 à 8, dans lequel le moyen (3) de réception du premier message de texte possède un numéro de code abrégé pour recevoir des messages de texte.

11. Appareil selon l'une quelconque des revendications 1 à 10, dans lequel l'adresse d'un destinataire voulu du second message de texte est placée à l'intérieur du corps du premier message de texte.

12. Appareil selon l'une quelconque des revendications 1 à 11, comprenant une mémoire de correspondances (7) contenant un journal des correspondances trouvées et des correspondances non trouvées du moyen de traitement.

13. Procédé de services de télécommunications pour un réseau de télécommunications mobiles, le procédé comprenant les étapes consistant à recevoir un premier message de texte en provenance d'un téléphone mobile (1), à traiter le premier message de texte reçu afin de déterminer une adresse de réseau à partir du premier message de texte ainsi traité et à envoyer l'adresse de réseau ainsi déterminée sous la forme d'un second message de texte audit téléphone mobile ou à un autre téléphone mobile, **caractérisé en ce que** le traitement du premier message de texte reçu est exécuté par un moteur (4) qui est capable d'interpréter du langage naturel compris dans ledit premier message de texte afin de déterminer ladite adresse de réseau et qui est en mesure, si une adresse de réseau convenable ne peut pas être déterminée, d'ouvrir un dialogue avec un utilisateur dudit téléphone mobile.

14. Procédé selon la revendication 13, dans lequel ledit moteur (4) est en mesure, si une adresse de réseau convenable ne peut pas être déterminée, de stocker ledit langage naturel dans une mémoire de correspondances (7).

15. Procédé selon la revendication 13, dans lequel ledit moteur (4) est en mesure, si une adresse de réseau convenable ne peut pas être déterminée, d'envoyer un message de texte contenant des options audit téléphone mobile afin de l'aider à déterminer une adresse de réseau convenable.

16. Procédé selon la revendication 13, dans lequel ledit moteur (4) est en outre en mesure d'interpréter une syntaxe prédéfinie.

17. Procédé selon l'une quelconque des revendications 13 à 16, dans lequel l'adresse de réseau déterminée comprend une indication d'une adresse internet.

18. Procédé selon la revendication 17, dans lequel l'adresse de réseau déterminée prend la forme d'une URL.

19. Procédé selon l'une quelconque des revendications 13 à 16, dans lequel le second message de texte est envoyé sous la forme d'un message WAP en mode Push.

20. Procédé selon l'une quelconque des revendications 13 à 19, dans lequel le premier message de texte est reçu à l'aide d'une adresse alphanumérique.

21. Procédé selon l'une quelconque des revendications 13 à 19, dans lequel le premier message de texte est reçu à l'aide d'un numéro de code abrégé.

22. Procédé selon l'une quelconque des revendications 13 à 21, dans lequel l'adresse d'un destinataire voulu du second message de texte est placée à l'intérieur du corps du premier message de texte.

23. Procédé selon l'une quelconque des revendications 13 à 22, dans lequel un journal des correspondances trouvées et des correspondances non trouvées de l'étape de traitement est stocké dans une mémoire de correspondances (7).

24. Programme d'ordinateur possédant des instructions exécutables par ordinateur qui, lorsqu'elles sont chargées sur un ordinateur, sont en mesure de commander à l'ordinateur d'exécuter le procédé selon l'une quelconque des revendications 13 à 23.

25. Programme d'ordinateur possédant un support lisible par ordinateur portant enregistrés des signaux d'information qui sont représentatifs du programme d'ordinateur selon la revendication 24.
